# EUROPEAN PATENT APPLICATION

(11) **EP 4 817 938 A1**
(43) Date of publication of application: **07.10.2026**
(21) Application number: 26154329.2
(22) Date of filing: 27.01.2026
(51) Int. Cl.: B60L 53/12, G05D 1/648, G01C 21/20

(54) **TRANSPORT SYSTEM AND OPERATING METHOD FOR TRANSPORT SYSTEM**

(30) Priority: 31.03.2025 TW 114112250
(71) Applicant: APh ePower Co., Ltd., Kaohsiung City 821 (TW)
(72) Inventor: SU, Hsiu-Hsien, 821 Kaohsiung City (TW); HUANG, Shang-Zeng, 821 Kaohsiung City (TW); LIN, Yu-Chi, 821 Kaohsiung City (TW); HUANG, Kuan-Chieh, 821 Kaohsiung City (TW)
(74) Representative: Becker, Eberhard

(57) **Abstract**

A transport system (100) and an operating method (S100) for the transport system are provided. The transport system includes an electric transport vehicle (110_1~110_3) and multiple wireless charging devices (120_1~120_n, 220). The operating method includes: defining a movable area (AA) in a field (FD) according to a layout of the field; setting multiple transport stations (ST1~ST5) of the electric transport vehicle in the movable area; establishing multiple transport paths (P1~P10) between the transport stations according to at least one shortest distance between the transport stations; defining multiple wireless charging positions (PO, PO1~PO8) at multiple positions adjacent to the transport stations on the transport paths and at intersections of the transport paths; and controlling the electric transport vehicle to move the wireless charging devices to the wireless charging positions.

## Description

### BACKGROUND

### Technical Field

The disclosure relates to a transport system and an operating method for the transport system.

### Description of Related Art

Current logistics facilities may transport goods using multiple automated electric transport vehicles. The electric transport vehicles may transport goods between multiple transport stations. The electric transport vehicles require electricity to move. It should be noted that the conventional logistics facilities provide fixed charging stations. The electric transport vehicles often waste a lot of time queuing at charging positions and traveling back and forth to the charging stations, thereby causing a decrease in the transportation efficiency of the electric transport vehicles. Therefore, in order to improve the transportation efficiency of the logistics facilities, how to increase charging opportunities of the electric transport vehicles is one of the key research focuses of persons skilled in the art.

### SUMMARY

The disclosure provides a transport system and an operating method, which can improve transportation efficiency of logistics facilities.

In an embodiment of the disclosure, an operating method is used for a transport system. The transport system includes an electric transport vehicle, multiple wireless charging devices, and a host. The host executes multiple commands of the operating method. The operating method includes the following steps. A movable area of a field is defined according to a layout of the field. Multiple transport stations of the electric transport vehicle are set in the movable area. Multiple transport paths are established between the transport stations according to at least one shortest distance between the transport stations. Multiple wireless charging positions are defined at multiple positions adjacent to the transport stations on the transport paths and at intersections of the transport paths. The electric transport vehicle is controlled to move the wireless charging devices to the wireless charging positions.

In an embodiment of the disclosure, a transport system includes an electric transport vehicle, multiple wireless charging devices, and a host. The electric transport vehicle transports goods in a field. The host defines a movable area in the field according to a layout of the field, and sets multiple transport stations of the electric transport vehicle in the movable area. The host establishes multiple transport paths between the transport stations according to at least one shortest distance between the transport stations. The host defines multiple wireless charging positions at multiple positions adjacent to the transport stations on the transport paths and at intersections of the transport paths. The host controls the electric transport vehicle to move the wireless charging devices to the wireless charging positions.

Based on the above, the operating method and the transport system establish the transport paths between the transport stations according to at least one shortest distance between the transport stations, and define the wireless charging positions at the positions adjacent to the transport stations on the transport paths and at the intersections of the transport paths. Therefore, when the electric transport vehicle passes by or stops at the wireless charging position on the transport path, the transport system may wirelessly charge the electric transport vehicle. The charging opportunities of the electric transport vehicle is increased. In this way, the transportation efficiency of the logistics field can be improved.

### BRIEF DESCRIPTION OF THE DRAWINGS

FIG. 1 is a schematic diagram of a transport system according to an embodiment of the disclosure.
FIG. 2 is a schematic diagram of an operating method according to an embodiment of the disclosure.
FIG. 3 is a circuit block diagram of a transport system according to an embodiment of the disclosure.
FIG. 4 is a schematic diagram of operations of step S 110 and step S 120 according to an embodiment of the disclosure.
FIG. 5 is a schematic diagram of an operation of step S130 according to an embodiment of the disclosure.
FIG. 6 is a schematic diagram of establishing a new section according to an embodiment of the disclosure.
FIG. 7 is a schematic diagram of an operation of step S140 according to an embodiment of the disclosure.
FIG. 8A and FIG. 8B are respectively schematic diagrams of a mains power transmission area according to an embodiment of the disclosure.
FIG. 9 is a schematic diagram of a wireless charging device according to an embodiment of the disclosure.

### DESCRIPTION OF THE EMBODIMENTS

Some embodiments of the disclosure will be described in detail with reference to the drawings. For the reference numerals cited in the following description, when the same reference numerals appear in different drawings, the reference numerals will be regarded as referring to the same or similar elements. The embodiments are only a part of the disclosure and do not disclose all possible implementations of the disclosure. More specifically, the embodiments are merely examples within the claims of the disclosure.

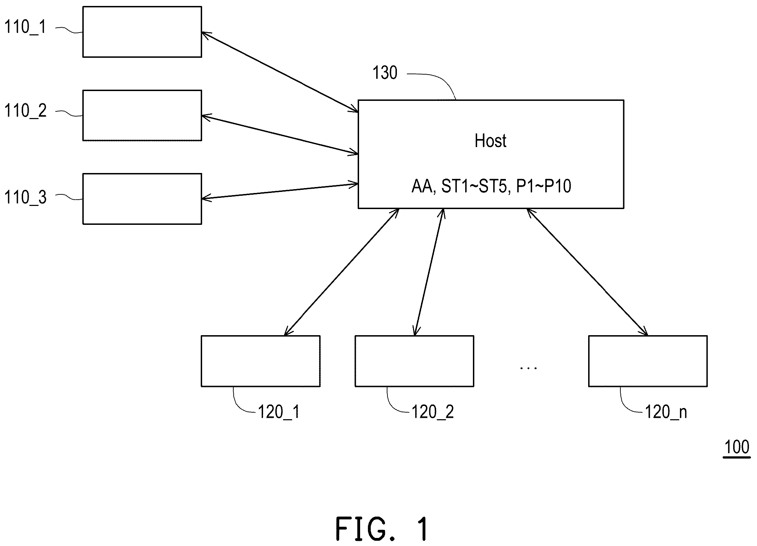

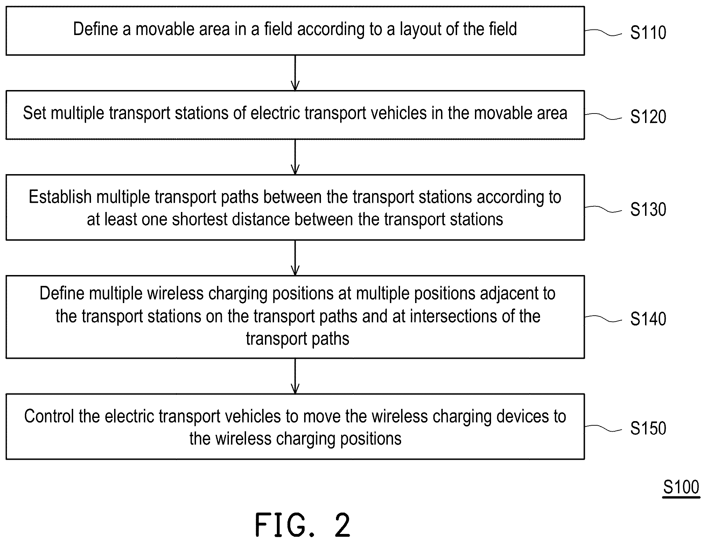

Please refer to FIG. 1 and FIG. 2. FIG. 1 is a schematic diagram of a transport system according to an embodiment of the disclosure. FIG. 2 is a schematic diagram of an operating method according to an embodiment of the disclosure. In the embodiment, a transport system 100 includes electric transport vehicles 110_1 to 110_3, wireless charging devices 120_1 to 120_n, and a host 130. The host 130 executes operating method S100. The host 130 executes multiple commands of operating method S100.

In the embodiment, operating method S100 includes steps S110 to S150. In step S110, the host 130 defines a movable area AA in a field according to a layout of the field. For example, the host 130 may receive a layout file of the field. The host 130 may define the movable area AA in the field according to the layout file of the field.

In step S120, the host 130 sets transport stations ST1 to ST5 of the electric transport vehicles 110_1 to 110_3 in the movable area AA. For example, positions of the transport stations ST1 to ST5 are respectively adjacent to a position of a shelf in the field. The transport vehicles 110_1 to 110_3 respectively remove goods from the shelf at the transport station ST1 to ST5 or move goods onto the shelf at the transport station ST1 to ST5. Therefore, the host 130 obtains the positions of the shelves in the field according to the layout file of the field, and sets the transport stations ST1 to ST5 according to the positions of the shelves in the field.

In step S130, the host 130 establishes transport paths P1 to P10 between the transport stations ST1 to ST5 according to multiple shortest distances between the transport stations ST1 to ST5. The electric transport vehicles 110_1 to 110_3 may move on the transport paths P1 to P10.

In step S140, the host 130 defines multiple wireless charging positions at multiple positions adjacent to the transport stations ST1 to ST5 on the transport paths P1 to P10 and at intersections of the transport paths. In step S150, the host 130 controls at least one of the electric transport vehicles 110_1 to 110_3 to move the wireless charging devices 120_1 to 120_n to the wireless charging positions. In other words, once the wireless charging positions are determined, at least one of the electric transport vehicles 110_1 to 110_3 is controlled to transport the wireless charging devices 120_1 to 120_n to the wireless charging positions.

It is worth mentioning that the host 130 establishes the transport paths P1 to P10 between the transport stations ST1 to ST5 according to at least one shortest distance between the transport stations ST1 to ST5, and defines the wireless charging positions at the positions adjacent to the transport stations ST1 to ST5 on the transport paths P1 to P10 and at the intersections of the transport paths P1 to P10. Therefore, when the electric transport vehicles 110_1 to 110_3 pass by or stop at the wireless charging positions on the transport paths P1 to P10, the transport system 100 may wirelessly charge the electric transport vehicles 110_1 to 110_3. The charging opportunities of the electric transport vehicles 110_1 to 110_3 may be increased. In this way, the transportation efficiency of the field can be improved.

In the embodiment, the wireless charging devices 120_1 to 120_n are disposed on a ground surface of the transport paths P1 to P10 and are substantially flush with the ground surface. In other words, in terms of layout, the transport paths P1 to P10 partially overlap with the wireless charging positions. Therefore, the disposition of the wireless charging devices 120_1 to 120_n and the wireless charging positions additionally increases the space cost of the field.

For illustrative purposes, the embodiment takes 5 transport stations ST1 to ST5 as an example and 3 electric transport vehicles 110_1 to 110_3 as an example. However, the disclosure is not limited to the number of transport stations or the number of electric transport vehicles. In addition, the number of transport paths increases as the number of transport stations increases.

Based on a change of a field FD, when the number of transport stations is changed, the host 130 re-executes operating method S100.

In the embodiment, the field may be a warehouse or a factory. The electric transport vehicles 110_1 to 110_3 may respectively be an automated guided vehicle (AGV) with the function of transporting goods. In the field, the electric transport vehicles 110_1 to 110_3 respectively move and transport goods following the transport paths P1 to P10 provided by the host 130.

In the embodiment, the host 130 may be implemented by an electronic device with a computing function. For example, the host 130 may be a server, a personal computer, a laptop, tablet, a smartphone, or other mobile devices.

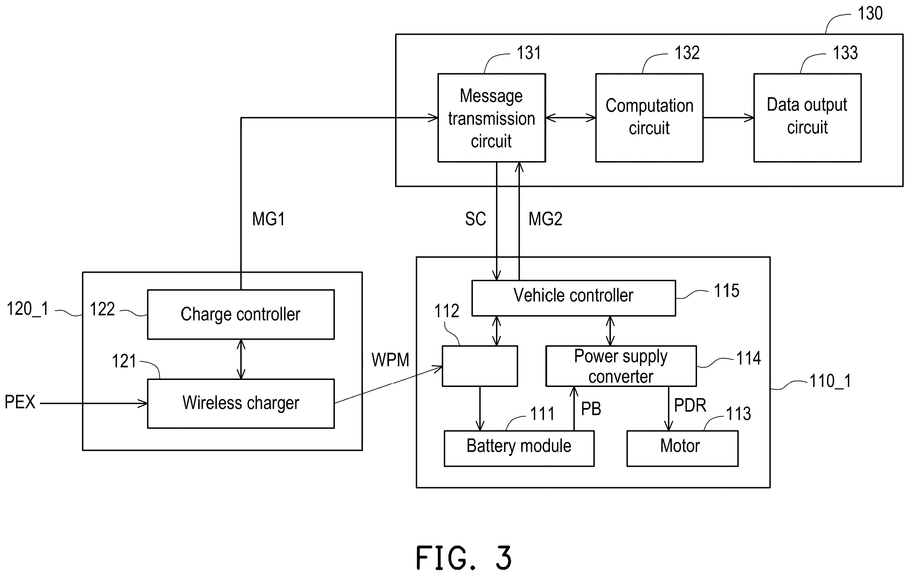

Please refer to FIG. 3. FIG. 3 is a circuit block diagram of a transport system according to an embodiment of the disclosure. The embodiment is exemplified by the electric transport vehicle 110_1, the wireless charging device 120_1, and the host 130 of the transport system 100. In the embodiment, the wireless charging device 120_1 includes a wireless charger 121 and a charge controller 122. The wireless charger 121 receives a mains power PEX, and outputs a wireless power supply WPM according to the mains power PEX. In the embodiment, the wireless charger 121 may convert the mains power PEX into the wireless power supply WPM, and send the wireless power supply WPM to the electric transport vehicle 110_1 via inductive coupling. Therefore, once the electric transport vehicle 110_1 passes by or stops near the wireless charging device 120_1, the wireless charger 121 may wirelessly charge the electric transport vehicle 110_1.

The charge controller 122 is connected to the wireless charger 121. The charge controller 122 provides a message MG1 of the wireless charging device 120_1 to the host 130. The message MG1 of the wireless charging device 120_1 includes the position of the wireless charger 121 and a usage condition of the wireless charger 121. For example, the usage condition of the wireless charger 121 includes the availability condition and the power of the wireless power supply WPM.

In the embodiment, the electric transport vehicle 110_1 includes a battery module 111 and a wireless power supply receiver 112. The wireless power supply receiver 112 is connected to the battery module 111. The wireless power supply receiver 112 receives the wireless power supply WPM from the wireless charger 121 via inductive coupling and charges the battery module 111 using the wireless power supply WPM. In the embodiment, the battery module 111 is implemented by an aluminum-ion battery. Therefore, the battery module 111 has a high charging speed and a high discharging speed.

The electric transport vehicle 110_1 also includes a motor 113 and a power supply converter 114. The electric transport vehicle 110_1 moves based on the running of the motor 113. The power supply converter 114 is connected to the battery module 111 and the motor 113. The power supply converter 114 converts a battery power supply PB stored in the battery module 111 into a drive power supply PDR, and drives the motor 113 using the drive power supply PDR.

The electric transport vehicle 110_1 also includes a vehicle controller 115. The vehicle controller 115 is connected to the power supply converter 114 and the wireless power supply receiver 112. The vehicle controller 115 provides a message MG2 of the electric transport vehicle 110_1 to the host 130. The message MG2 of the electric transport vehicle 110_1 includes the position of the electric transport vehicle 110_1 and the usage condition of the electric transport vehicle 110_1. For example, the usage condition of the electric transport vehicle 110_1 includes usage conditions of the power supply converter 114 and the wireless power supply receiver 112. The host 130 may also obtain the battery level of the battery module 111 via the wireless power supply receiver 112, and obtain the running status of the motor 113 (e.g., running time and rotational speed) via the power supply converter 114. In addition, the vehicle controller 115 may receive a control signal SC of the host 130. The vehicle controller 115 controls the electric transport vehicle 110_1 to move on one of the transport paths P1 to P10 (e.g., a designated transport path) according to the control signal SC. The vehicle controller 115 may control the charging speed of the battery module 111 and/or the rotational speed of the motor 113 according to the control signal SC.

In the embodiment, the host 130 includes a message transmission circuit 131 and a computation circuit 132. The computation circuit 132 executes operating method S100. In addition, the message transmission circuit 131 receives the message MG2 of the electric transport vehicle 110_1 and the message MG1 of the wireless charging device 120_1. The computation circuit 132 is connected to the message transmission circuit 131. The computation circuit 132 adjusts at least one of the wireless charging positions, the designated transport path of the electric transport vehicle 110_1, the number of electric transport vehicles, and the range of a mains power transmission area according to a message of the charge controller 122 and a message of the vehicle controller 115.

In the embodiment, the host 130 also includes a data output circuit 133. The data output circuit 133 is connected to the computation circuit 132. The data output circuit 133 stores and outputs at least one of the message MG2 of the electric transport vehicle 110_1, the message MG1 of the wireless charging device 120_1, the wireless charging positions, the designated transport path of the electric transport vehicle 110_1, the number of electric transport vehicles, and the range of the mains power transmission area.

In the embodiment, the message transmission circuit 131 wirelessly communicates with the vehicle controller 115 and the charge controller 122 using any protocol. In some embodiments, the message transmission circuit 131 may communicate with the vehicle controller 115 and the charge controller 122 via wired communication.

In the embodiment, the computation circuit 132 is, for example, a central processing unit (CPU), other programmable general-purpose or specific-purpose microprocessors, digital signal processors (DSP), programmable controllers, application-specific integrated circuits (ASIC), programmable logic devices (PLD), other similar devices, or a combination of the devices, which may load and execute a computer program.

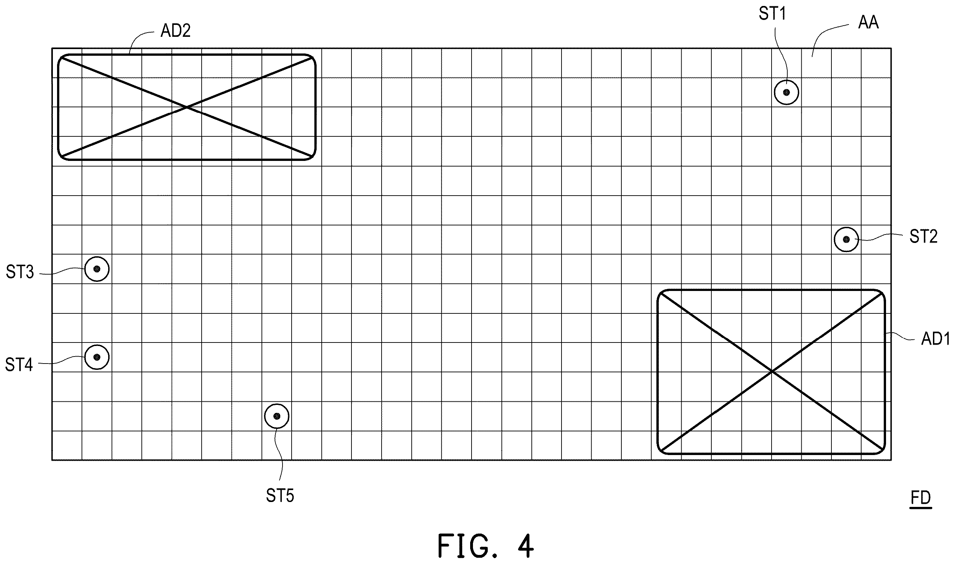

Please refer to FIG. 1, FIG. 2, and FIG. 4. FIG. 4 is a schematic diagram of operations of step S110 and step S120 according to an embodiment of the disclosure. The field FD is divided into multiple unit areas. The unit areas respectively have a different address. The host 130 may identify the positions of the transport stations ST1 to ST5, the positions of the transport paths P1 to P10, and the positions of the wireless charging positions based on the unit areas. In step S110, the host 130 defines movement prohibited areas AD1 and AD2 in the field FD according to the layout of the field FD. The movement prohibited areas AD1 and AD2 are areas where the electric transport vehicles 110_1 to 110_3 cannot enter. The host 130 defines an area other than the movement prohibited areas AD1 and AD2 as the movable area AA. In step S120, the host 130 sets the transport stations ST1 to ST5 in the movable area AA.

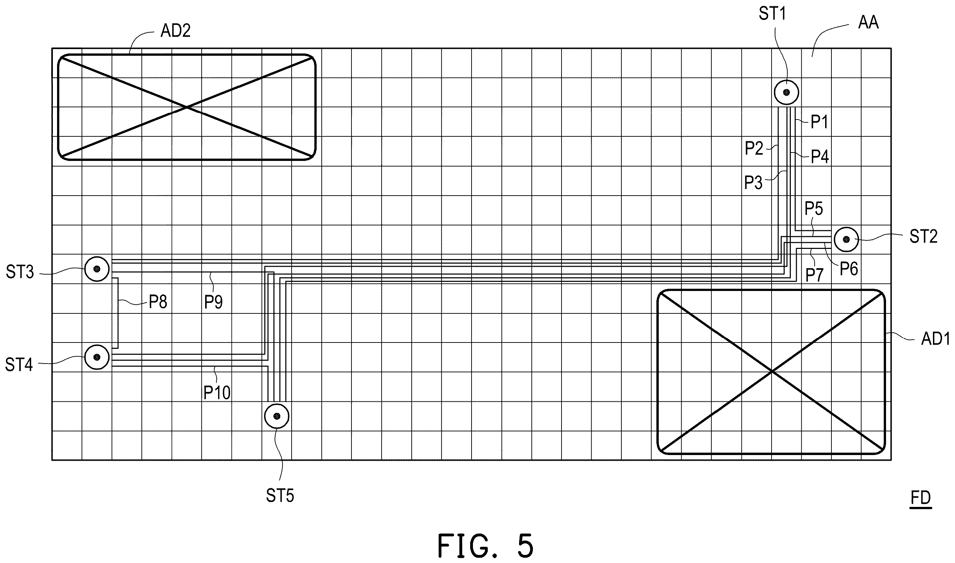

Please refer to FIG. 1, FIG. 2, and FIG. 5. FIG. 5 is a schematic diagram of an operation of step S130 according to an embodiment of the disclosure. The host 130 establishes the transport paths P1 to P10 between the transport stations ST1 and ST5 according to the shortest distances between the transport stations ST1 and ST5. For example, there is a first shortest distance between the transport station ST1 and the transport station ST2. The distance of the transport path P1 between the transport station ST1 and the transport station ST2 is equal to the first shortest distance. There is a second shortest distance between the transport station ST1 and the transport station ST3. The distance of the transport path P2 between the transport station ST1 and the transport station ST3 is equal to the second shortest distance. There is a third shortest distance between the transport station ST1 and the transport station ST4. The distance of the transport path P3 between the transport station ST1 and the transport station ST4 is equal to the third shortest distance, and so on. The first shortest distance is the same as or different from the second shortest distance. The first shortest distance is the same as or different from the third shortest distance, and so on. Therefore, the distances of the transport paths P1 to P10 may not be completely the same.

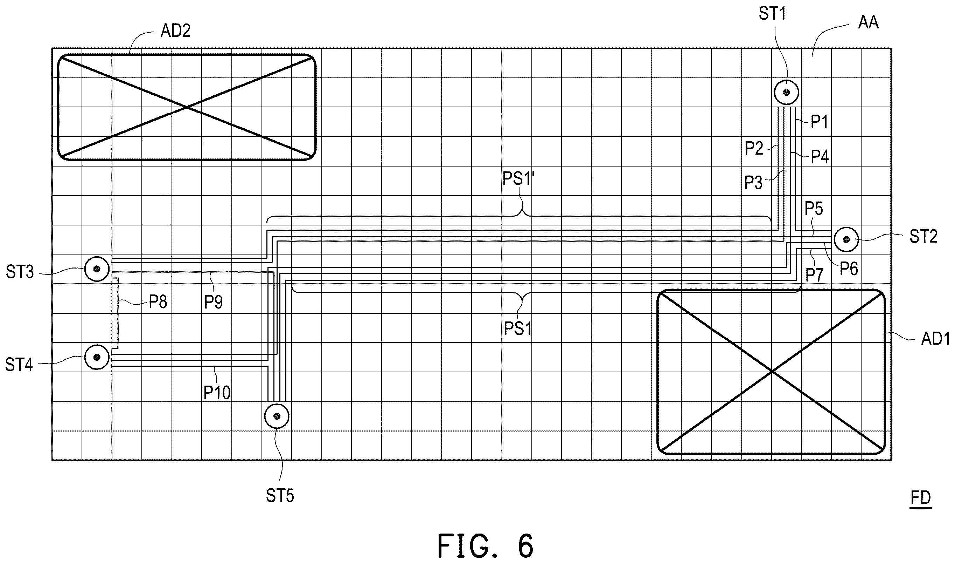

Please refer to FIG. 1, FIG. 2, and FIG. 6. FIG. 6 is a schematic diagram of establishing a new section according to an embodiment of the disclosure. The host 130 may also decide whether to establish a new section. Taking the electric transport vehicle 110_1 as an example, the host 130 also determines the number of times the electric transport vehicle 110_1 avoids other electric transport vehicles (e.g., the electric transport vehicles 110_2 and 110_3) on a section PS1 of the transport path P1. After the transport paths P1 to P10 are established, the host 130 may obtain the above number of times using simulation. When the number of times exceeds a preset number, it indicates that the section PS1 is relatively congested. Therefore, the host 130 establishes a new section PS1'. The new section PS1' is parallel to the section PS1. When the number of times is less than or equal to the preset number, it indicates that the section PS1 is not congested. The host 130 does not establish the new section PS1'.

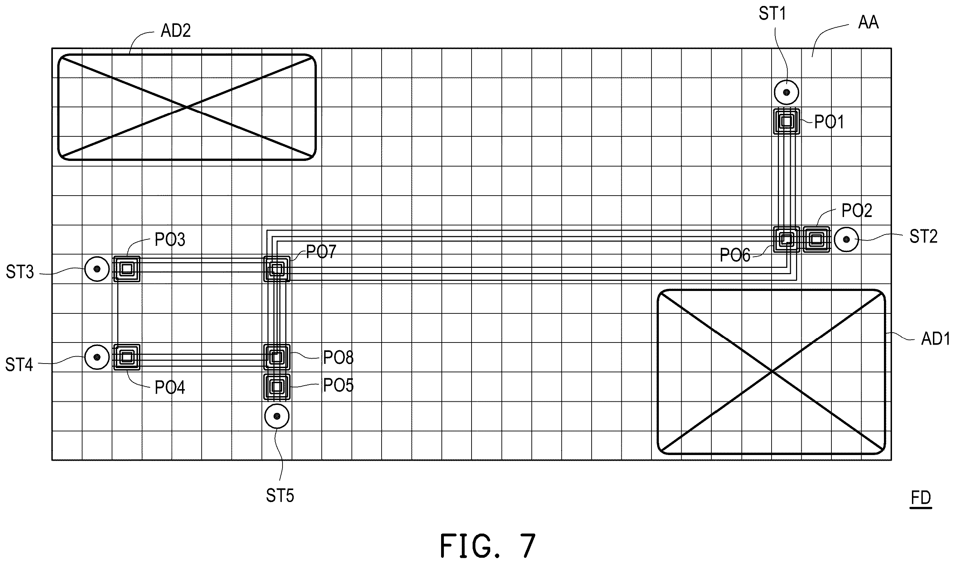

Please refer to FIG. 1, FIG. 2, and FIG. 7. FIG. 7 is a schematic diagram of an operation of step S140 according to an embodiment of the disclosure. The host 130 defines wireless charging positions PO1 to PO8 at multiple positions adjacent to the transport stations ST1 to ST5 on the transport paths P1 to P10 and at the intersections of the transport paths P1 to P10. The wireless charging positions PO1 to PO5 are respectively adjacent to one of the transport stations ST1 to ST5. The wireless charging positions PO6 to PO8 are respectively located at one of the intersections.

Next, the host 130 may control the electric transport vehicle 110_1 to transport 8 wireless charging devices among the wireless charging devices 120_1 to 120_n to the wireless charging positions PO1 to PO8. For example, the wireless charging device 120_1 is disposed at the wireless charging position PO1. The wireless charging device 120_2 is disposed at the wireless charging position PO2, and so on.

In some embodiments, the host 130 may control multiple electric transport vehicles to transport the 8 wireless charging devices among the wireless charging devices 120_1 to 120_n to the wireless charging positions PO1 to PO8.

In the embodiment, the section PS1 on the transport path P1 is located between the wireless charging position PO6 and the wireless charging position PO7. Therefore, the new section PS1' is also established between the wireless charging position PO6 and the wireless charging position PO7.

In the embodiment, the host 130 may decide to allocate 1 to 5 electric transport vehicles to the field FD. For example, the electric transport vehicle 110_1 is allocated to the field FD. The electric transport vehicle 110_1 runs along the transport path P2. Therefore, when the electric transport vehicle 110_1 passes by or stops at the wireless charging positions PO1, PO6, PO7, and PO3, the host 130 controls the wireless charging devices located at the wireless charging positions PO1, PO6, PO7, and PO3 to wirelessly charge the electric transport vehicle 110_1.

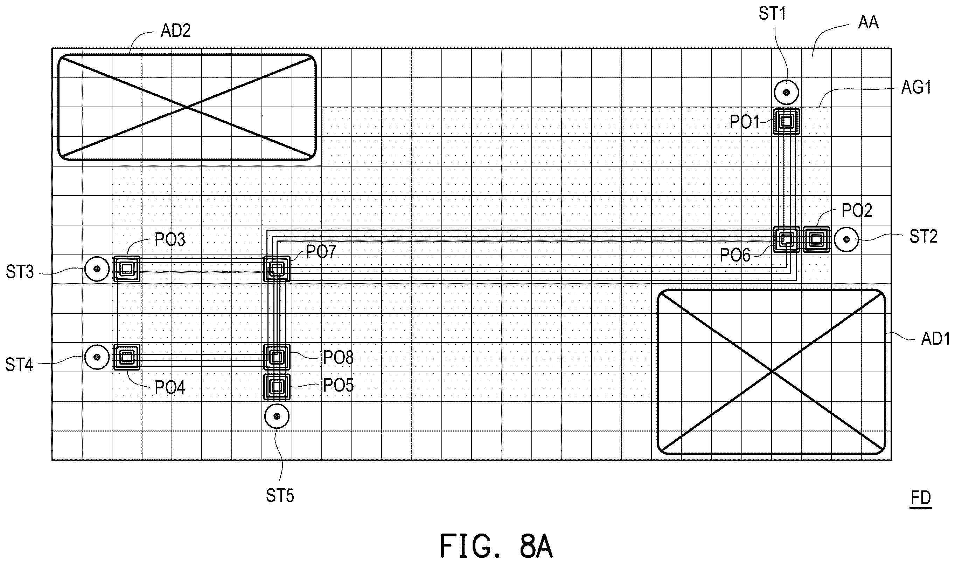

Please refer to FIG. 1 and FIG. 8A. FIG. 8A is a schematic diagram of a mains power transmission area according to an embodiment of the disclosure. In the embodiment, the host 130 adjusts the range of a mains power transmission area AG1 according to the transport paths P1 to P10. The wireless charging devices located at the wireless charging positions PO1 to PO8 may provide the wireless power supply according to the mains power from the mains power transmission area AG1. In the embodiment, the range of the mains power transmission area AG1 is approximately equal to a range enclosed by the transport stations ST1 to ST5 in the movable area AA and includes the range of the transport paths P1 to P10.

In the embodiment, in the case where the transport paths P1 to P10 or the transport stations ST1 to ST5 are frequently changed, the range of the mains power transmission area AG1 is as shown in FIG. 8A.

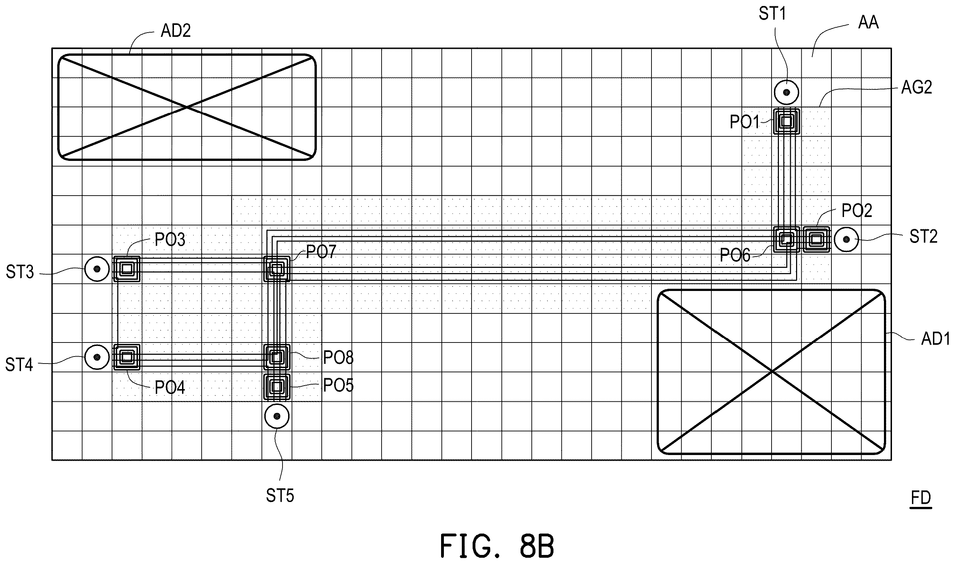

Please refer to FIG. 1 and FIG. 8B. FIG. 8B is a schematic diagram of a mains power transmission area according to an embodiment of the disclosure. In the embodiment, in the case where the transport paths P1 to P10 or the transport stations ST1 to ST5 are not frequently changed, the range of a mains power transmission area AG2 is as shown in FIG. 8B. The range of the mains power transmission area AG2 is less than the range of the mains power transmission area AG1 as shown in FIG. 8A.

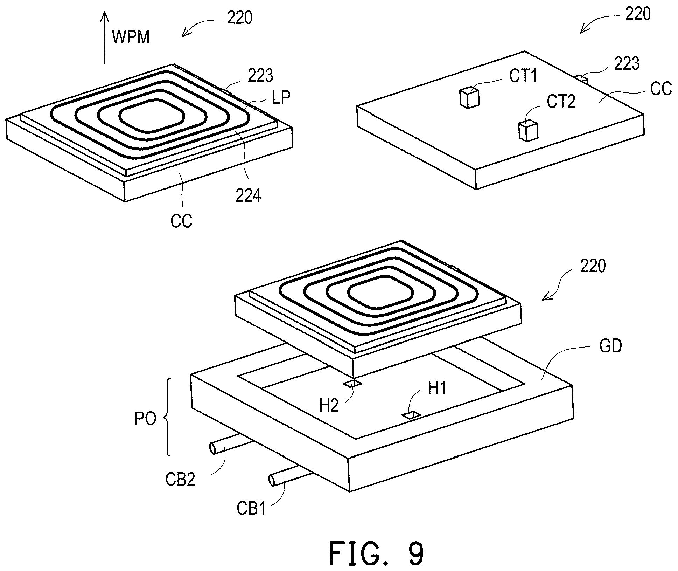

Please refer to FIG. 1 and FIG. 9. FIG. 9 is a schematic diagram of a wireless charging device and a wireless charging position according to an embodiment of the disclosure. FIG. 9 shows a wireless charging device 220 and a wireless charging position PO. The wireless charging device 220 includes a circuit module CC, a communication element 223, a power supply transmission loop LP, and a magnetic structure 224. The circuit module CC generates the wireless power supply WPM according to the mains power PEX. The circuit module CC includes a converter and a controller (not shown). The function of the controller is substantially the same as that of the charge controller 122 as shown in FIG. 3. The charge controller of the wireless charging device 220 may wirelessly communicate with the host 130 via the communication element 223. The converter receives the mains power PEX, and converts the mains power PEX into the wireless power supply WPM. The power supply transmission loop LP is connected to the circuit module CC. The power supply transmission loop LP outputs the wireless power supply WPM. The functions of the converter and the power supply transmission loop LP are substantially the same as that of the wireless charger 121 as shown in FIG. 3.

The communication element 223, the power supply transmission loop LP, and the magnetic structure 224 are respectively disposed on a first surface of the circuit module CC. Therefore, the magnetic structure 224 is located between the power supply transmission loop LP and the circuit module CC. The magnetic structure 224 may concentrate a magnetic field generated by the power supply transmission loop LP. The directionality of the magnetic field is enhanced. Therefore, the directionality of transmission of the wireless power supply WPM is enhanced. The magnetic structure 224 may enable the circuit module CC to be not affected by the magnetic field generated by the power supply transmission loop LP.

The wireless charging device 220 includes mains power contact structures CT1 and CT2. The mains power contact structures CT1 and CT2 are disposed on a second surface of the circuit module CC. The second surface is opposite to the first surface.

In the embodiment, cables CB1 and CB2 used for transmitting the mains power PEX are disposed below the ground surface of the field. There is a groove in each unit area of the field. There are perforations H1 and H2 in the groove. When the wireless charging device 220 is transported to the wireless charging position PO, the wireless charging device 220 is placed in the groove corresponding to the wireless charging position PO. The mains power contact structure CT1 is in contact with the cable CB1 via the perforation H1. The mains power contact structure CT2 is in contact with the cable CB2 via the perforation H2. Therefore, the wireless charging device 220 receives the mains power PEX.

Furthermore, when the wireless charging device 220 is placed in the groove corresponding to the wireless charging position PO, the first surface of the circuit module CC is flush with a ground surface GD of the field.

In some embodiments, when the wireless charging device 220 is placed in the groove corresponding to the wireless charging position PO, the power supply transmission loop LP is flush with the ground surface GD of the field.

In some embodiments, the wireless charging device 220 may include a protective cover (not shown). When the wireless charging device 220 is placed in the groove corresponding to the wireless charging position PO, the protective cover is flush with the ground surface GD of the field.

In the embodiment, the wireless charging device 220 includes the magnetic structure 224. Therefore, to remove the wireless charging device 220 placed in the groove, the electric transport vehicle 110_1 may use magnetic force to remove the wireless charging device 220 placed in the groove. In some embodiments, the electric transport vehicle 110_1 may also use a suitable clamping mechanism to remove the wireless charging device 220 placed in the groove.

In the embodiment, the wireless charging device 220 may be one of the wireless charging devices 120_1 to 120_n.

In summary, the operating method and the transport system establish the transport paths between the transport stations according to at least one shortest distance between the transport stations, and define the wireless charging positions at the positions adjacent to the transport stations on the transport paths and at the intersections of the transport paths. Therefore, when the electric transport vehicle passes by or stops at the wireless charging position on the transport path, the transport system may wirelessly charge the electric transport vehicle. The charging opportunities of the electric transport vehicle is increased. In this way, the transportation efficiency of the logistics field can be improved.

Although the disclosure has been disclosed in the above embodiments, the embodiments are not intended to limit the disclosure. Persons skilled in the art may make some changes and modifications without departing from the spirit and scope of the disclosure. Therefore, the protection scope of the disclosure shall be defined by the appended claims.

## Claims

1. An operating method (S100) of a transport system (100), wherein the transport system (100) comprises an electric transport vehicle (110_1~110_3), a plurality of wireless charging devices (120_1~120_n, 220), and a host (130), wherein the host (130) executes a plurality of commands of the operating method (S100), the operating method (S100) comprising:
defining a movable area (AA) in a field (FD) according to a layout of the field (FD).
setting a plurality of transport stations (ST1~ST5) of the electric transport vehicle (110_1~110_3) in the movable area (AA);
establishing a plurality of transport paths (P1~P10) between the transport stations (ST1~ST5) according to at least one shortest distance between the transport stations (ST1~ST5);
defining a plurality of wireless charging positions (PO, PO1~PO8) at a plurality of positions adjacent to the transport stations (ST1~ST5) on the transport paths (P1~P10) and at intersections of the transport paths (P1~P10); and
controlling the electric transport vehicle (110_1~110_3) to move the wireless charging devices (120_1~120_n, 220) to the wireless charging positions (PO, PO1~PO8).

2. The operating method (S100) according to claim 1, wherein the step (S110) of defining the movable area (AA) in the field (FD) according to the layout of the field (FD) comprises:
defining a movement prohibited area (AD1, AD2) in the field (FD) according to the layout of the field (FD); and
defining an area other than the movement prohibited area (AD1, AD2) as the movable area (AA).

3. The operating method (S100) according to claim 1, wherein the electric transport vehicle (110_1~110_3) moves on the transport paths (P1~P10).

4. The operating method (S100) according to claim 1, further comprising:
when the electric transport vehicle (110_1~110_3) passes by or stops at a first wireless charging position (PO, PO1~PO8) among the wireless charging positions (PO, PO1~PO8), wirelessly charging the electric transport vehicle (110_1~110_3) by a first wireless charging device (120_1~120_n, 220) located at the first wireless charging position (PO, PO1~PO8).

5. The operating method (S100) according to claim 1, further comprising:
determining a number of times the electric transport vehicle (110_1~110_3) avoids other electric transport vehicles (110_1~110_3) on a section (PS1) of a first transport path (P1~P10) among the transport paths (P1~P10); and
when the number of times exceeds a preset number, establishing a new section (PS1'),
wherein the new section (PS1') is parallel to the section (PS1).

6. The operating method (S100) according to claim 1, further comprising:
adjusting a range of a mains power transmission area (AG1, AG2) according to the transport paths (P1~P10),
wherein the wireless charging devices (120_1~120_n, 220) disposed at the wireless charging positions (PO, PO1~PO8) provide a wireless power supply (WPM) according to a mains power (PEX) from the mains power transmission area (AG1, AG2).

7. The operating method (S100) according to claim 1, further comprising:
when a number of the transport stations (ST1~ST5) changes, re-executing the operating method (S100).

8. A transport system (100), comprising:
an electric transport vehicle (110_1~110_3), configured to transport goods in a field (FD);
a plurality of wireless charging devices (120_1~120_n, 220); and
a host (130), configured to:
define a movable area (AA) in the field (FD) according to a layout of the field (FD),
set a plurality of transport stations (ST1~ST5) of the electric transport vehicle (110_1~110_3) in the movable area (AA),
establish a plurality of transport paths (P1~P10) between the transport stations (ST1~ST5) according to at least one shortest distance between the transport stations (ST1~ST5),
define a plurality of wireless charging positions (PO, PO1~PO8) at a plurality of positions adjacent to the transport stations (ST1~ST5) on the transport paths (P1~P10) and at intersections of the transport paths (P1~P10), and
control the electric transport vehicle (110_1~110_3) to move the wireless charging devices (120_1~120_n, 220) to the wireless charging positions (PO, PO1~PO8).

9. The transport system (100) according to claim 8, wherein the host (130) defines a movement prohibited area (AD1, AD2) in the field (FD) according to the layout of the field (FD), and defines an area other than the movement prohibited area (AD1, AD2) as the movable area (AA).

10. The transport system (100) according to claim 8, wherein the electric transport vehicle (110_1~110_3) moves on the transport paths (P1~P10).

11. The transport system (100) according to claim 8, wherein when the electric transport vehicle (110_1~110_3) passes by or stops at a first wireless charging position (PO, PO1~PO8) among the wireless charging positions (PO, PO1~PO8), a first wireless charging device (120_1~120_n, 220) located at the first wireless charging position (PO, PO1~PO8) wirelessly charges the electric transport vehicle (110_1~110_3).

12. The transport system (100) according to claim 8, wherein:
the host (130) determines a number of times the electric transport vehicle (110_1~110_3) avoids other electric transport vehicles (110_1~110_3) on a section (PS1) of a first transport path (P1~P10) among the transport paths (P1~P10),
when the number of times exceeds a preset limit, the host (130) establishes a new section (PS1'), and
the new section (PS1') is parallel to the section (PS1).

13. The transport system (100) according to claim 8, wherein one of the wireless charging devices (120_1~120_n, 220) comprises:
a wireless charger (121), configured to receive a mains power (PEX) and output a wireless power supply (WPM) according to the mains power (PEX); and
a charge controller (122), connected to the wireless charger (121) and configured to provide a first message (MG1, MG2) of a corresponding wireless charging device (120_1~120_n, 220) to the host (130),
wherein the first message (MG1, MG2) comprises a position of the wireless charger (121) and a usage condition of the wireless charger (121).

14. The transport system (100) according to claim 13, wherein the electric transport vehicle (110_1~110_3) comprises:
a battery module (111); and
a wireless power supply receiver (112), connected to the battery module (111) and configured to receive the wireless power supply (WPM) from the wireless charger (121) via inductive coupling and charge the battery module (111) using the wireless power supply (WPM).

15. The transport system (100) according to claim 14, wherein the electric transport vehicle (110_1~110_3) further comprises:
a motor (113), wherein the electric transport vehicle (110_1~110_3) moves based on running of the motor (113); and
a power supply converter (114), connected to the battery module (111) and the motor (113), and configured to convert a battery power supply (PB) stored in the battery module (111) into a drive power supply (PDR), and drive the motor (113) using the drive power supply (PDR).

16. The transport system (100) according to claim 15, wherein the electric transport vehicle (110_1~110_3) further comprises:
a vehicle controller (115), connected to the power supply converter (114) and the wireless power supply receiver (112), and configured to provide a second message (MG1, MG2) of the electric transport vehicle (110_1~110_3) to the host (130),
wherein the second message (MG1, MG2) comprises a position of the electric transport vehicle (110_1~110_3) and a usage condition of the electric transport vehicle (110_1~110_3).

17. The transport system (100) according to claim 16, wherein the host (130) comprises:
a message transmission circuit (131), configured to receive the first message (MG1, MG2) and the second message (MG1, MG2); and
a computation circuit (132), connected to the message transmission circuit (131) and configured to adjust at least one of the wireless charging positions (PO, PO1~PO8), a designated transport path (P1~P10) of the electric transport vehicle (110_1~110_3), a number of the electric transport vehicle (110_1~110_3), and a range of a mains power transmission area (AG1, AG2) according to the first message (MG1, MG2) and the second message (MG1, MG2).

18. The transport system (100) according to claim 17, wherein the host (130) further comprises:
a data output circuit (133), connected to the computation circuit (132) and configured to store and output at least one of the first message (MG1, MG2), the second message (MG1, MG2), the wireless charging positions (PO, PO1~PO8), the designated transport path (P1~P10) of the electric transport vehicle (110_1~110_3), the number of the electric transport vehicle (110_1~110_3), and the range of the mains power transmission area (AG1, AG2).

19. The transport system (100) according to claim 14, wherein the battery module (111) is implemented by an aluminum-ion battery.

20. The transport system (100) according to claim 8, wherein one of the wireless charging devices (120_1~120_n, 220) comprises:
a circuit module (CC), configured to generate a wireless power supply (WPM) according to a mains power (PEX);
a power supply transmission loop (LP), connected to the circuit module (CC) and configured to output the wireless power supply (WPM); and
a magnetic structure (224), disposed between the circuit module (CC) and the power supply transmission loop (LP).
